# EUROPÄISCHE PATENTSCHRIFT

(11) **EP 3 720 651 B1**
(45) Veröffentlichungstag und Bekanntmachung des Hinweises auf die Patenterteilung: **26.07.2023**
(21) Anmeldenummer: 18836450.9
(22) Anmeldetag: 04.12.2018
(51) Int. Cl.: B23Q 3/12, B23B 31/26, B23Q 11/00, B23C 5/26

(54) **WERKZEUGMASCHINE UND BEARBEITUNGSWERKZEUG DAFÜR**
MACHINE TOOL AND MACHINING TOOL THEREFOR
MACHINE-OUTIL ET OUTIL D'USINAGE POUR CELLE-CI

(30) Priorität: 05.12.2017 AT 510032017
(43) Veröffentlichungstag der Anmeldung: 14.10.2020
(73) Patentinhaber: Fill Gesellschaft m.b.H., 4942 Gurten (AT)
(72) Erfinder: DALLINGER, Friedrich, 4942 Gurten (AT)
(74) Vertreter: Burger, Hannes
(86) Internationale Anmeldenummer: PCT/AT2018/060282
(87) Internationale Veröffentlichungsnummer: WO 2019/109117

(56) Entgegenhaltungen:
- EP-A1- 2 363 227
- DE-A1- 3 312 571
- US-A- 6 095 729
- US-A1- 2003 072 631

## Beschreibung

Die Erfindung betrifft eine Werkzeugmaschine, sowie ein Bearbeitungswerkzeug zur spanabhebenden Bearbeitung von Werkstücken.

Aus dem Stand der Technik ist es bekannt, dass verschiedene Bearbeitungswerkzeuge in einer Werkzeugspindel einer Werkzeugmaschine gespannt werden können. Die Werkzeugmaschine muss hierbei derart ausgelegt sein, dass das größte zur Bearbeitung vorgesehene Bearbeitungswerkzeug noch in der Werkzeugspindel gespannt werden kann, bzw. die Werkzeugspindel und das Bearbeitungswerkzeug hierbei ausreichend groß dimensioniert sind, um die auf tretenden Kräfte aufnehmen zu können.

Die US 6,095,729 A offenbart eine Spindelverlängerung für eine Fräsmaschine, die die Basis für die Oberbegriffe der Ansprüche 1 und 15 bildet. Aus der US 2003/0072631 A1 und der DE 3312571 A1 sind weitere Spindelverlängerungen bekannt. Mit der Größe der Werkzeugmaschine steigen natürlich auch die Anschaffungskosten für die Werkzeugmaschine. Dies ist besonders dann relevant, wenn vorgesehen ist, dass an einer Werkzeugmaschine überwiegend kleine Bearbeitungswerkzeuge gespannt werden und nur für wenige Bearbeitungsschritte große Bearbeitungswerkzeuge benötigt werden. Für den Großteil der Bearbeitungsschritte ist die Bearbeitungsmaschine dadurch zu groß dimensioniert, was neben den erhöhten Anschaffungskosten auch zu einer verminderten Energieeffizienz beim Betrieb der Werkzeugmaschine führt.

Aufgabe der vorliegenden Erfindung war es, die Nachteile des Standes der Technik zu überwinden und eine Werkzeugmaschine zur Verfügung zu stellen, welche möglichst klein dimensioniert ist, wobei für einzelne ausgewählte Bearbeitungsschritte trotzdem große Bearbeitungswerkzeuge gespannt werden können.

Diese Aufgabe wird durch eine Vorrichtung und ein Verfahren gemäß den Ansprüchen gelöst.

Erfindungsgemäß sind eine Werkzeugmaschine nach Anspruch 1 und ein Bearbeitungswerkzeug nach Anspruch 15 vorgesehen.

Die erfindungsgemäße Werkzeugmaschine weist den Vorteil auf, dass für einzelne Bearbeitungsschritte große Bearbeitungswerkzeuge verwendet werden können, ohne dass dabei der Spindelkopf bzw. die Werkzeugaufnahme der Werkzeugspindel größer dimensioniert werden müsste. Die bei großen Bearbeitungswerkzeugen auftretenden Axialkräfte bzw. Radialkräfte und damit einhergehende eingeleitete Biegemomente können mittels dem Abstützring bzw. dem externen Lager aufgenommen werden, sodass die Krafteinwirkung auf die Spindellagerung verringert wird. Insbesondere kann vorgesehen sein, dass das vordere der Spindellager derart ausgebildet ist, dass die durch die Abstützung auf das Bearbeitungswerkzeug wirkenden Zugkräfte aufgenommen werden können.

Weiters kann es zweckmäßig sein, wenn der Abstützring am Bearbeitungswerkzeug zwischen dem Bearbeitungskopf und dem Spannbereich ausgebildet ist. Bei einer derartigen Positionierung des Abstützringes kann der Abstützring die am Bearbeitungswerkzeug auftretenden Kräfte gut aufnehmen, ohne dass dabei die Bearbeitungsmöglichkeiten des Bearbeitungswerkzeuges eingeschränkt werden.

Erfindungsgemäß ist das externe Lager als Axiallager ausgebildet. Ein Axiallager kann die axial auftretenden Kräfte aufnehmen und somit die Kräfte an der Spindellagerung vermindern. Darüber hinaus kann ein Axiallager durch die Abstützwirkung auch die in das Bearbeitungswerkzeug eingeleiteten Biegemomente, welche aufgrund von Radialkräften auftreten, aufnehmen.

Darüber hinaus kann vorgesehen sein, dass zwischen dem externen Lager und dem Spindelkopf ein Abstützelement angeordnet ist. Das Abstützelement dient zur Kraftübertragung zwischen dem externen Lager und dem Spindelkopf.

Das Abstützelement kann durch verschiedenste Abstützmittel zum Spindelkopf beabstandet gehalten werden.

Vorteilhaft ist auch eine Ausprägung, gemäß welcher vorgesehen sein kann, dass zumindest drei Abstützstifte vorgesehen sind, mittels welchen das Abstützelement am Gehäuse abgestützt ist.

Gemäß einer Weiterbildung ist es möglich, dass die Abstützstifte längenveränderlich sind. Von Vorteil ist hierbei, dass durch diese Maßnahme die Lage des Abstützelementes an verschiedene Bearbeitungswerkzeuge bzw. an verschiedene Werkzeugaufnahmen angepasst werden kann.

Ferner kann es zweckmäßig sein, wenn die Abstützstifte in den Spindelkopf integriert sind und mittels einem Aktor, insbesondere einem hydraulisch wirkenden Aktor, längenveränderlich sind.

Darüber hinaus kann vorgesehen sein, dass zwischen dem Abstützring und dem Spindelkopf ein Federelement angeordnet ist. Durch diese Maßnahme können etwaige Toleranzen der Werkzeugaufnahme ausgeglichen werden.

Weiters kann vorgesehen sein, dass das Federelement in den Abstützring integriert ist. Gemäß einer besonderen Ausprägung ist es möglich, dass das externe Lager an einer ersten Seite am Federelement anliegt und an einer zweiten Seite am Abstützelement anliegt, wobei das Abstützelement mittels der Abstützstifte am Spindelkopf abgestützt ist.

Entsprechend einer vorteilhaften Weiterbildung kann vorgesehen sein, dass das externe Lager als Wälzlager ausgebildet ist. Mittels einem Wälzlager können hohe Kräfte übertragen werden.

Ferner kann vorgesehen sein, dass am Spindelkopf ein Abstützrohr angeordnet ist, in welchem ein Radiallager aufgenommen ist.

Das Radiallager kann beispielsweise als Schrägkugellager, als Pendelrollenlager oder als Vierpunktlager ausgebildet sein.

Darüber hinaus kann vorgesehen sein, dass ein Durchmesser des Abstützringes kleiner ist, als ein Durchmesser des Bearbeitungskopfes. Durch diese Maßnahme wird gewährleistet, dass der Abstützring beim Bearbeiten des Werkstückes die maximale Bearbeitungstiefe nicht minimiert, sondern dass der Abstützring in das durch den Bearbeitungskopf hergestellte Loch im Werkstück hineingeführt werden kann und somit eine große Bearbeitungstiefe aufweist. Vorteilhaft ist auch eine Ausprägung, gemäß welcher vorgesehen sein kann, dass zwei externe Lager vorgesehen sind, wobei ein Axiallager und ein Radiallager ausgebildet sind. Durch diese Maßnahme können die Vorteile der axialen Lagerung und der radialen Lagerung kombiniert werden.

Erfindungsgemäß ist es vorgesehen, dass am Bearbeitungswerkzeug ein Abstützring ausgebildet ist.

In einem ersten Ausführungsbeispiel kann vorgesehen sein, dass die Werkzeugspindel mittels einer Spindellagerung im Gehäuse gelagert ist und dass ein Antriebsmotor zum Antrieb der Werkzeugspindel außerhalb des Gehäuses angeordnet ist. Der Antriebsmotor kann hierbei axial zum Gehäuse beabstandet sein.

In einem zweiten Ausführungsbeispiel kann vorgesehen sein, dass die Werkzeugspindel mittels der Spindellagerung im Gehäuse gelagert ist und dass im Gehäuse gleichzeitig der Antriebsmotor ausgebildet ist. Hierbei kann die Werkzeugspindel gleichzeitig als Rotor dienen und das Gehäuse gleichzeitig als Stator dienen.

Außerdem kann vorgesehen sein, dass das Lager an einer Stirnseite des Gehäuses angeordnet ist. Das Lager kann somit eine Einheit mit dem Gehäuse bilden. In wieder einer andern Ausführungsvariante kann auch vorgesehen sein, dass das Lager in die Stirnseite des Gehäuses integriert ist. Bei einer derartigen Ausführungsvariante kann auch vorgesehen sein, dass in das Gehäuse ein Aktor integriert ist, mittels welchem das Lager vom Gehäuse abgehoben werden kann.

Weiters kann vorgesehen sein, dass die Werkzeugspindel einen zentralen Kanal aufweist, welcher zur Leitung eines Kühl/und oder Schmiermediums dient.

Das externe Lager, welches auch als Lager bezeichnet wird, kann beispielsweise durch ein Wälzlager oder ein Gleitlager gebildet sein. Weiters können auch sonstige Mittel, wie umlaufende Kugeln oder umlaufende Abstützelemente verwendet werden, welche dazu geeignet sind, eine Abstützkraft übertragen zu können und dabei gleichzeitig eine Relative Verdrehbewegung zwischen dem Abstützring und dem Spindelgehäuse zuzulassen.

Darüber hinaus ist es auch denkbar, dass in den Abstützstiften Piezoelemente angeordnet sind bzw. Piezoelemente auf die Abstützstifte wirken. Dadurch kann aktiv und während dem Bearbeitungsvorgang die Anpresskraft auf den Abstützring variiert werden.

Weiters ist ein Verfahren zum Bearbeiten eines Werkstückes mittels einer Werkzeugmaschine vorgesehen, das aber nicht Teil des Schutzgegenstandes der vorliegenden Erfindung ist.

Das Verfahren umfasst die folgenden Verfahrensschritte:
- Bearbeiten des Werkstückes mittels einem in einer Werkzeugspindel gespannten Bearbeitungswerkzeug;
- Aktives Verändern einer Einwirkkraft auf den Abstützring.

Durch Verändern der Einwirkkraft auf den Abstützring kann das Bearbeitungswerkzeug beispielsweise in Schwingung versetzt werden. Dadurch kann während dem Bearbeitungsvorgang der Span gezielt gebrochen werden. Weiters ist es möglich, dass durch Verändern der Einwirkkraft auf den Abstützring dieser in eine Taumelbewegung versetzt wird. Besonders bei Tieflochwerkzeugen kann dies vorteilhaft sein, um eine Steuerung des Bohrvorganges erreichen zu können. Hierbei kann vorgesehen, dass die Position der Werkzeugschneide erfasst wird, um diese entsprechend steuern zu können.

Alternativ dazu kann auch vorgesehen sein, dass die Veränderung der Einwirkkraft auf den Abstützring dazu verwendet wird, um im Bearbeitungswerkzeug auftretende Schwingungen abgefangen werden.

Die Änderung der Einwirkkraft auf den Abstützring kann dadurch erreicht werden, dass die Abstützstifte lokal und über einen kurzen Zeitraum verlängert werden, oder deren Aufnahme bewegt wird, um die Abstützstifte an das externe Lager anzudrücken. Dies kann beispielsweise mittels Piezoelementen erreicht werden.

Weiters kann vorgesehen sein, dass im Wirkbereich des Lagers ein Sensor angeordnet ist, welcher zur Erfassung von Schwingungen ausgebildet ist. Insbesondere kann vorgesehen sein, dass der Sensor im Abstützring angeordnet ist, bzw. in diesen integriert ist. Der Sensor kann zum Erfassen der Zustände am Bearbeitungswerkzeug dienen. Dadurch können entsprechende Informationen an eine Steuerung geliefert werden, mittels welcher die Aktoren zum Einwirken auf den Abstützring gesteuert werden können.

In einer alternativen Ausführungsvariante kann auch vorgesehen sein, dass ein Sensor in das Abstützelement integriert ist.

In wieder einer anderen Ausführungsvariante kann auch vorgesehen sein, dass ein Sensor in den oder die Abstützstifte integriert ist.

In einer weiteren Ausführungsvariante kann vorgesehen sein, dass der Sensor in das Gehäuse integriert ist.

Der Sensor kann hierbei dazu ausgebildet sein, um die vom Lager auf den Abstützring wirkende Kraft erfassen zu können. Alternativ oder zusätzlich kann auch vorgesehen sein, dass der Sensor als Beschleunigungssensor ausgebildet ist welcher am Abstützring auftretende Beschleunigungen erfassen kann.Weiters kann vorgesehen sein, dass das Bearbeitungswerkzeug im Spannbereich elastisch ausgebildet ist, um den Werkzeugschneidenabstand einstellen zu können. Alternativ dazu kann auch vorgesehen sein, dass im Spannbereich eine Kupplung ausgebildet ist, welche Axialverschiebungen zulässt und gleichzeitig zum Übertragen von Drehmomenten ausgebildet ist.

Zum besseren Verständnis der Erfindung wird diese anhand der nachfolgenden Figuren näher erläutert.

Es zeigen jeweils in stark vereinfachter, schematischer Darstellung:
- Fig. 1: einen Querschnitt eines ersten Ausführungsbeispiels eines Bearbeitungskopfes einer Werkzeugmaschine;
- Fig. 2: einen Querschnitt eines weiteren Ausführungsbeispiels eines Bearbeitungskopfes einer Werkzeugmaschine, wobei ein im Bearbeitungskopf gespanntes Bearbeitungswerkzeug einen Abstützring mit einem Federelement aufweist;
- Fig. 3: einen Querschnitt eines weiteren Ausführungsbeispiels eines Bearbeitungskopfes einer Werkzeugmaschine, wobei in einem Abstützstift ein Federelement angeordnet ist;
- Fig. 4: einen Querschnitt eines weiteren Ausführungsbeispiels eines Bearbeitungskopfes einer Werkzeugmaschine, wobei der Abstützring direkt an den Bearbeitungskopf anschließt;
- Fig. 5: einen Querschnitt eines weiteren Ausführungsbeispiels eines Bearbeitungskopfes einer Werkzeugmaschine, wobei die Abstützstifte längenveränderlich sind;
- Fig. 6: einen Querschnitt eines weiteren Beispiels eines Bearbeitungskopfes einer Werkzeugmaschine, wobei das externe Lager als Radiallager ausgebildet ist, das nicht zum Schutzgegenstand der Ansprüche gehört;
- Fig. 7: einen Querschnitt eines weiteren Ausführungsbeispiels eines Bearbeitungskopfes einer Werkzeugmaschine, wobei sowohl ein Radiallager als auch ein Axiallager als externes Lager vorgesehen ist;
- Fig. 8: einen Querschnitt eines weiteren Ausführungsbeispiels eines Bearbeitungskopfes einer Werkzeugmaschine, wobei das externe Lager an einer Stirnseite des Spindelgehäuses angeordnet ist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

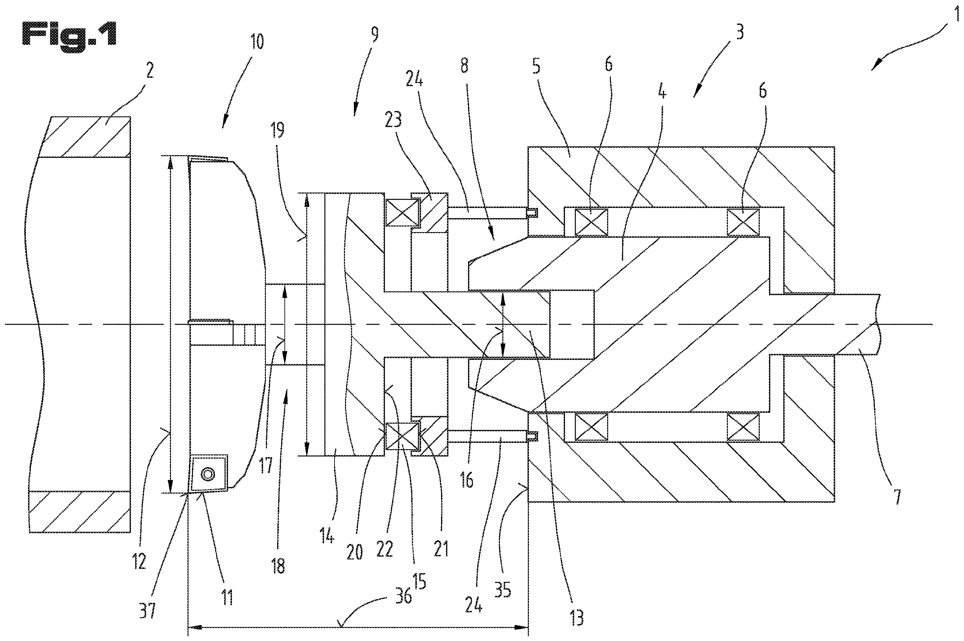

Fig. 1 zeigt ein erstes Ausführungsbeispiel eines Teilbereichs einer Werkzeugmaschine 1 zur spanabhebenden Bearbeitung von Werkstücken 2. Die Werkzeugmaschine 1 kann beispielsweise als Fräsmaschine ausgebildet sein.

Insbesondere ist ein Spindelkopf 3 dargestellt, in welchem eine Werkzeugspindel 4 aufgenommen ist. Der Spindelkopf 3 umfasst ein Gehäuse 5, die Werkzeugspindel 4, sowie eine Spindellagerung 6 zur Aufnahme der Werkzeugspindel 4 im Gehäuse 5. Die Spindellagerung 6 kann insbesondere durch eine Wälzlagerung gebildet sein. Wie aus Fig. 1 ersichtlich, kann vorgesehen sein, dass die Werkzeugspindel 4 mittels zwei voneinander beabstandeter Spindellagerungen 6 gelagert ist.

Im vorliegenden Ausführungsbeispiel gemäß Fig. 1 weist die Werkzeugspindel 4 einen Antriebszapfen 7 auf, welcher rückseitig aus dem Gehäuse 5 geführt ist und mit einem nicht dargestellten Antriebsmotor gekoppelt ist. In einem weiteren Ausführungsbeispiel kann natürlich auch vorgesehen sein, dass die Werkzeugspindel 4 als Motorspindel ausgebildet ist und der Antriebsmotor zum Antrieb der Werkzeugspindel 4 direkt in das Gehäuse 5 integriert ist. Die Werkzeugspindel 4 kann auch durch sonstige dem Fachmann bekannten Varianten aufgebaut sein.

Weiters weist die Werkzeugspindel 4 eine Werkzeugaufnahme 8 auf, welche zum Spannen eines Bearbeitungswerkzeuges 9 in der Werkzeugspindel 4 dient. Die Werkzeugaufnahme 8 kann hierbei durch verschiedenste dem Fachmann bekannte Spannfutter bzw. Spannaufnahmen gebildet sein.

Das Bearbeitungswerkzeug 9 weist einen Bearbeitungskopf 10 auf, an welchem zumindest eine Schneidkante 11 ausgebildet ist. Im vorliegenden Ausführungsbeispiel werden die Schneidkanten 11 beispielsweise durch Wendeschneidplatten gebildet. Alternativ dazu ist es beispielsweise auch denkbar, dass für den Bearbeitungskopf 10 ein Hochleistungsschnellschnittstahl verwendet wird und die Schneidkanten 11 direkt im Bearbeitungskopf 10 ausgebildet sind. Der Bearbeitungskopf 10 kann auch auf sonstigen dem Fachmann bekannten Ausführungen basieren.

Der Bearbeitungskopf 10 weist einen Durchmesser 12 auf. Als Durchmesser 12 des Bearbeitungskopfes 10 wird hierbei der Wirkdurchmesser der äußersten Schneidkanten 11 definiert.

Weiters weist das Bearbeitungswerkzeug 9 einen Spannbereich 13 auf, welcher in der Werkzeugaufnahme 8 der Werkzeugspindel 4 aufgenommen werden kann. Der Spannbereich 13 des Bearbeitungswerkzeuges 9 ist hierbei an die Werkzeugaufnahme 8 der Werkzeugspindel 4 angepasst, wobei ebenfalls wieder sämtliche dem Fachmann bekannte Spannsysteme verwendet werden können. Der Spannbereich 13 des Bearbeitungswerkzeuges 9 ist dem Bearbeitungskopf 10 gegenüberliegend angeordnet.

Weiters ist vorgesehen, dass das Bearbeitungswerkzeug 9 einen Abstützring 14 aufweist, mittels welchem das Bearbeitungswerkzeug 9 über ein externes Lager 15 am Spindelkopf 3, beispielsweise am Gehäuse 5, abgestützt werden kann. Durch die Stützfunktion des Abstützringes 14 bzw. des externen Lagers 15 kann die Biegesteifigkeit des Bearbeitungswerkzeuges 9 erhöht werden, wodurch die Verwendung größerer Bearbeitungsköpfe 10 in Verbindung mit kleindimensionierten Spannbereichen 13 ermöglicht wird. Der Spannbereich 13 weist hierbei einen Spanndurchmesser 16 auf, wobei je nach verwendetem Spannsystem natürlich auch ein kegeliger Spannbereich 13 zum Einsatz kommen kann und der Spanndurchmesser 16 hierbei durch die Bezeichnung der jeweiligen Kegelaufnahme definiert wird.

Ein Schaftdurchmesser 17 des Bearbeitungswerkzeuges 9 ist zumeist an den Spanndurchmesser 16 des Bearbeitungswerkzeuges 9 angepasst. Bei Vorhandensein eines zylindrischen Spannbereiches 13 kann vorgesehen sein, dass der Spanndurchmesser 16 und der Schaftdurchmesser 17 gleich groß sind. Insbesondere kann vorgesehen sein, dass zwischen dem Bearbeitungskopf 10 und dem Abstützring 14 ein Hauptschaft 18 ausgebildet ist, welcher den Schaftdurchmesser 17 aufweist.

Der Abstützring 14 weist einen Durchmesser 19 auf, welcher die maximale Durchmesserausdehnung des Abstützringes 14 angibt. Der Durchmesser 19 des Abstützringes 14 ist vorzugsweise kleiner als der Durchmesser 12 des Bearbeitungskopfes 10. Dadurch kann gewährleistet werden, dass beispielsweise eine Ausfräsung, welche vom Bearbeitungskopf 10 erstellt wurde, so groß ist, dass der Abstützring 14 in diese Ausfräsung eingeführt werden kann. Dadurch kann die maximale Bearbeitungstiefe des Bearbeitungswerkzeuges 9 vergrößert werden, da diese nicht durch den Abstützring 14 begrenzt wird.

Wie aus Fig. 1 ersichtlich, kann vorgesehen sein, dass das externe Lager 15 als Axiallager ausgebildet ist, wobei eine erste Seite 20 des externen Lagers 15 dem Bearbeitungskopf 10 zugewandt ist. Eine zweite Seite 21 des externen Lagers 15 ist dem Spannbereich 13 des Bearbeitungswerkzeuges 9 zugewandt. Insbesondere ist vorgesehen, dass die erste Seite 20 des externen Lagers 15 an einer Stirnfläche 22 des Abstützringes 14 anliegt. Die Stirnfläche 22 des Abstützringes 14 ist hierbei ebenfalls dem Spannbereich 13 zugewandt.

Weiters ist im vorliegenden Ausführungsbeispiel ein Abstützelement 23 ausgebildet, welches an der zweiten Seite 21 des externen Lagers 15 anliegt. Das Abstützelement 23 kann an Abstützstiften 24 angeordnet sein, mittels welchen das Abstützelement 23 am Gehäuse 5 abgestützt ist. Insbesondere kann vorgesehen sein, dass die Abstützstifte 24 mit dem Abstützelement 23 verbunden sind, sodass das Abstützelement 23 und die Abstützstifte 24 gemeinsam in die Werkzeugmaschine 1 eingesetzt werden können.

Weiters ist es auch denkbar, dass das externe Lager 15 mit dem Abstützelement 23 und den Abstützstiften 24 eine Einheit bildet.

In einem ersten Ausführungsbeispiel kann vorgesehen sein, dass drei Abstützstifte 24 ausgebildet sind, wodurch eine exakt bestimmte Aufnahmesituation erreicht werden kann.

Wie aus Fig. 1 ersichtlich, kann vorgesehen sein, dass im Gehäuse 5 des Spindelkopfes 3 eine oder mehrere Ausnehmungen 25 ausgebildet sind, in welche die Abstützstifte 24 aufgenommen werden können. Dadurch kann eine exakte Positionierung der Abstützstifte 24 erreicht werden. Die Ausnehmungen 25 können beispielsweise zylindrisch, kugelförmig kegelförmig oder in einer sonstigen Geometrie ausgebildet sein. Weiters ist es auch denkbar, dass die Ausnehmung 25 als umlaufende Nut ausgebildet ist.

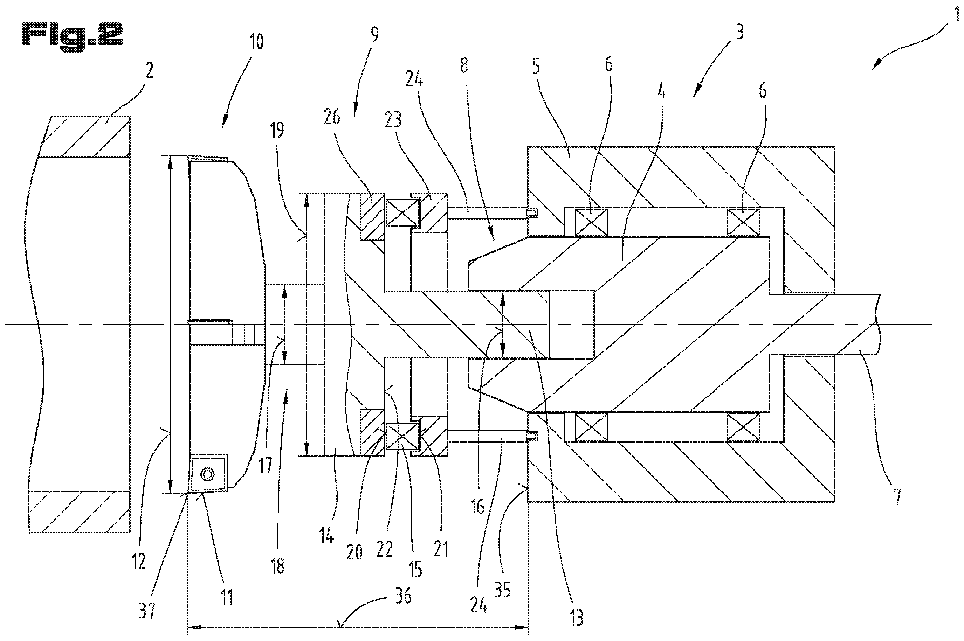

In der Fig. 2 ist eine weitere und gegebenenfalls für sich eigenständige Ausführungsform des Bearbeitungswerkzeuges 9 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

Wie aus Fig. 2 ersichtlich, kann vorgesehen sein, dass im Abstützring 14 ein Federelement 26 integriert ist, an welchem das externe Lager 15 anliegt. Durch die Verwendung des Federelementes 26 können etwaige Maßtoleranzen des Bearbeitungswerkzeuges 9 ausgeglichen werden. Ein derartig aufgebautes Bearbeitungswerkzeug 9 bringt insbesondere dann Vorteile mit sich, wenn als Spannaufnahme des Bearbeitungswerkzeuges 9 eine Kegelaufnahme, wie etwa eine Hohlschaftkegelaufnahme (HSK) verwendet wird. Bei einer derartigen Kegelaufnahme wird die Position des Bearbeitungswerkzeuges 9 durch den Spannvorgang vorgegeben. Weiters ist es auch denkbar, dass ein Steilkegel in der Kegelaufnahme ausgebildet ist.

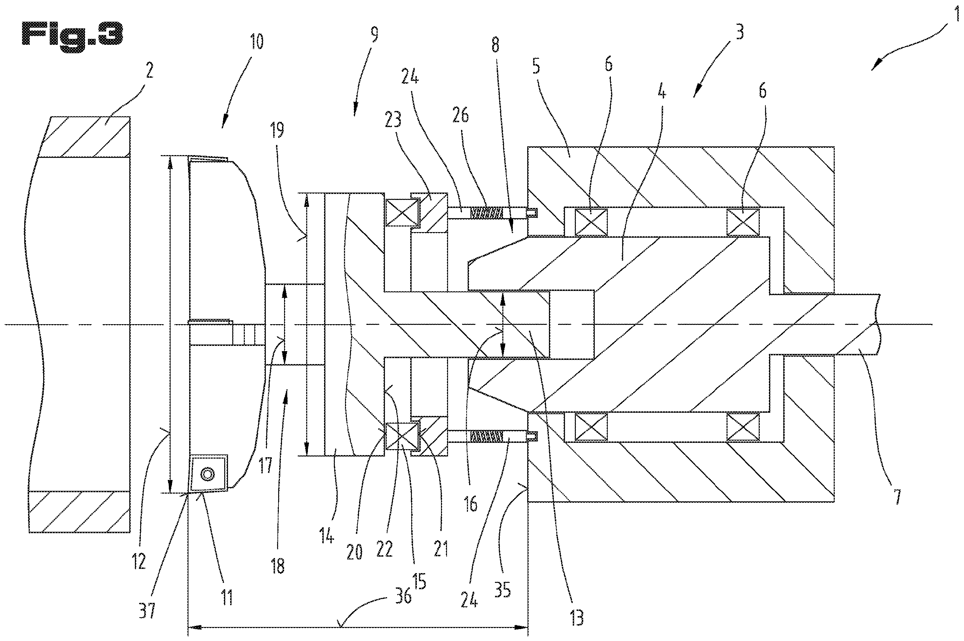

In der Fig. 3 ist eine weitere und gegebenenfalls für sich eigenständige Ausführungsform des Bearbeitungswerkzeuges 9 gezeigt, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Wie aus Fig. 3 ersichtlich, kann vorgesehen sein, dass das Federelement 26 in den Abstützstiften 24 integriert ist. Das Federelement 26 kann auch eine Dämpfungswirkung aufweisen. Alternativ dazu kann vorgesehen sein, dass zusätzlich zum Federelement 26 ein Dämpfungselement ausgebildet ist.

Alternativ dazu oder zusätzlich kann auch vorgesehen sein, die Abstützstifte 24 längenveränderlich sind, um den Anpressdruck des externen Lagers am Abstützring 14 variieren zu können.

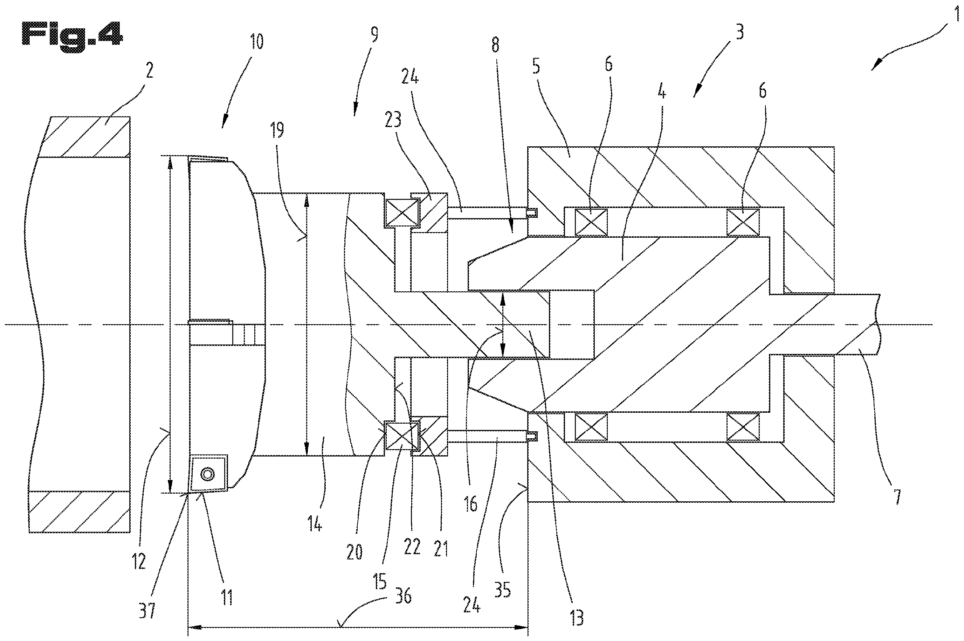

In der Fig. 4 ist eine weitere und gegebenenfalls für sich eigenständige Ausführungsform des Bearbeitungswerkzeuges 9 gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Wie aus Fig. 4 ersichtlich, kann vorgesehen sein, dass der Abstützring 14 ohne das Vorhandensein eines Hauptschaftes 18 direkt an den Bearbeitungskopf 10 anschließend ausgebildet ist. Weiters kann auch vorgesehen sein, dass der Abstützring 14 direkt in den Bearbeitungskopf 10 integriert ist beziehungsweise an diesem ausgebildet ist. Bei einem derartigen Ausführungsbeispiel kann die Biegesteifigkeit des Bearbeitungswerkzeuges 9 weiter erhöht werden.

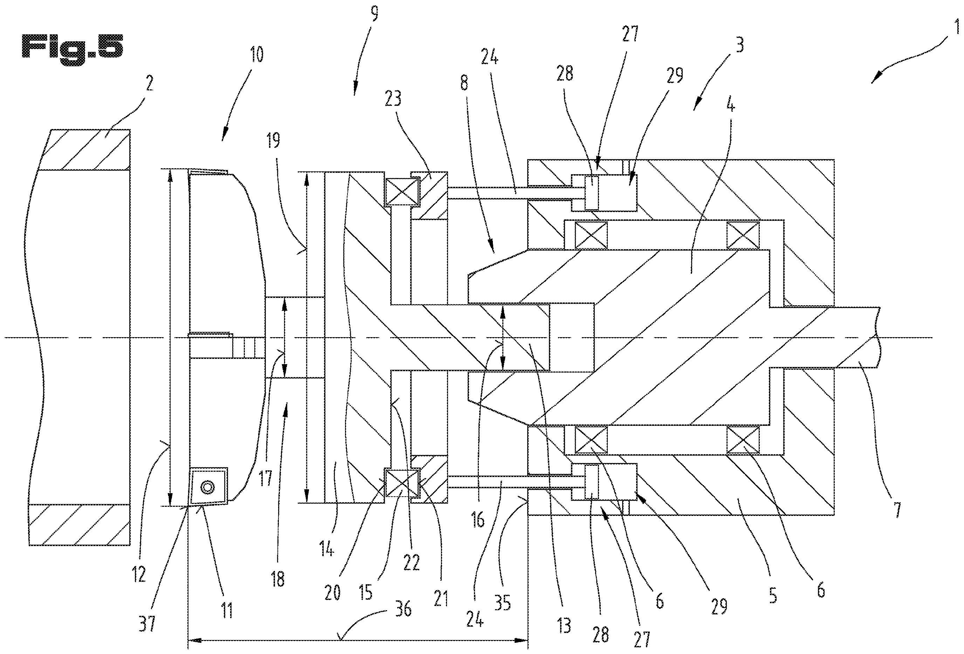

In der Fig. 5 ist eine weitere und gegebenenfalls für sich eigenständige Ausführungsform des Bearbeitungswerkzeuges 9 gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Fig. 5 zeigt ein weiteres Ausführungsbeispiel der Werkzeugmaschine 1. Wie aus Fig. 5 ersichtlich, kann vorgesehen sein, dass der Abstützstift 24 mit einem Aktor 27 gekoppelt ist mittels welchem die Anpresskraft des Abstützelementes 23 an das externe Lager 15 einstellbar ist. Wie aus dem Ausführungsbeispiel aus Fig. 5 ersichtlich, kann beispielsweise vorgesehen sein, dass der Aktor 27 als hydraulischer Aktor ausgebildet ist, welcher einen Kolben 28 umfasst, der mit dem Abstützstift 24 gekoppelt ist. Der Kolben 28 kann in einer Hydraulickammer 29 aufgenommen sein, welche beispielsweise mittels einer Hydraulikflüssigkeit mit Druck beaufschlagbar ist. Die Hydraulikkammer 29 kann beispielsweise direkt im Gehäuse 5 ausgebildet sein.

Natürlich kann vorgesehen sein, dass für jeden der Abstützstifte 24 ein eigener Aktor 27 vorgesehen ist.

Bei einem derartigen Ausführungsbeispiel wie es in Fig. 5 dargestellt ist, kann das Bearbeitungswerkzeug 9 in die Werkzeugspindel 4 eingesetzt werden und in dieser befestigt werden, wobei während dem Einsetzen des Bearbeitungswerkzeuges 9 in die Werkzeugspindel 4 noch kein Druck vom externen Lager 15 auf den Abstützring 14 aufgebracht wird. Nach dem erfolgten Einsetzen des Bearbeitungswerkzeuges 9 in die Werkzeugspindel 4 kann mittels dem Aktor 27 das externe Lager 15 mit einer vorbestimmten Kraft gegen den Abstützring 14 gedrückt werden. Dadurch kann die Abstützwirkung erreicht werden. Der Aktor 27 kann auch dazu verwendet werden, um die Krafteinwirkung auf den Abstützring 14 zeitlich veränderlich zu steuern, um beispielsweise einen Spanbruch während dem Bearbeitungsvorgang zu bewirken.

Weiters kann vorgesehen sein, dass der Aktor 27 in Form eines Piezoelementes ausgebildet ist.

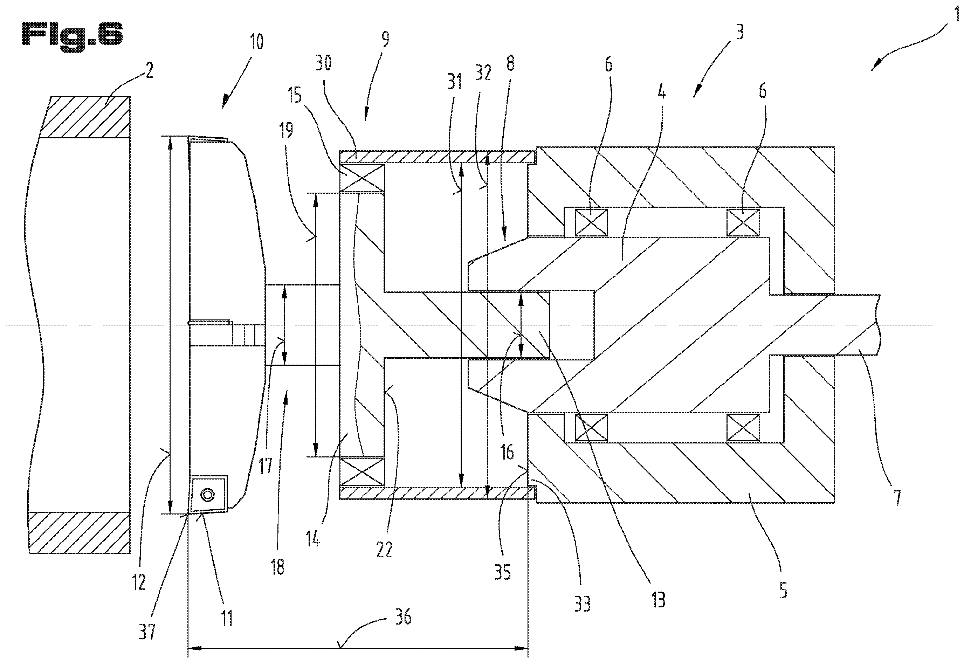

In der Fig. 6 ist ein Beispiel des Bearbeitungswerkzeuges 9 gezeigt, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Fig. 6 zeigt ein Beispiel der Werkzeugmaschine 1, das nicht unter dem Schutzumfang der Ansprüche fällt. Wie aus Fig. 6 ersichtlich, kann vorgesehen sein, dass das externe Lager 15 nicht als Axiallager sondern als Radiallager ausgebildet ist. Bei einem derartigen Ausführungsbeispiel weist das externe Lager 15 einen Innendurchmesser auf, welcher in etwa dem Durchmesser 19 des Abstützringes 14 entspricht. Weiters ist ein Abstützrohr 30 vorgesehen, in welchem das externe Lager 15 aufgenommen ist. Insbesondere ist hierbei vorgesehen, dass ein Innendurchmesser 31 des Abstützrohres 30 in etwa gleich groß ist wie ein Außendurchmesser des externen Lagers 15. Ein Außendurchmesser 32 des Abstützrohres 30 ist bei einem derartigen Ausführungsbeispiel derart gewählt, dass er kleiner ist als der Durchmesser 12 des Bearbeitungskopfes 10. Wie aus Fig. 6 ersichtlich, kann vorgesehen sein, dass am Gehäuse 5 ein Absatz 33 ausgebildet ist, an welchem das Abstützrohr 30 aufgenommen ist. Weiters kann vorgesehen sein, dass das Abstützrohr 30 mittels einer formschlüssigen Verbindung, wie etwa einer Schraubverbindung am Gehäuse 5 befestigt werden kann.

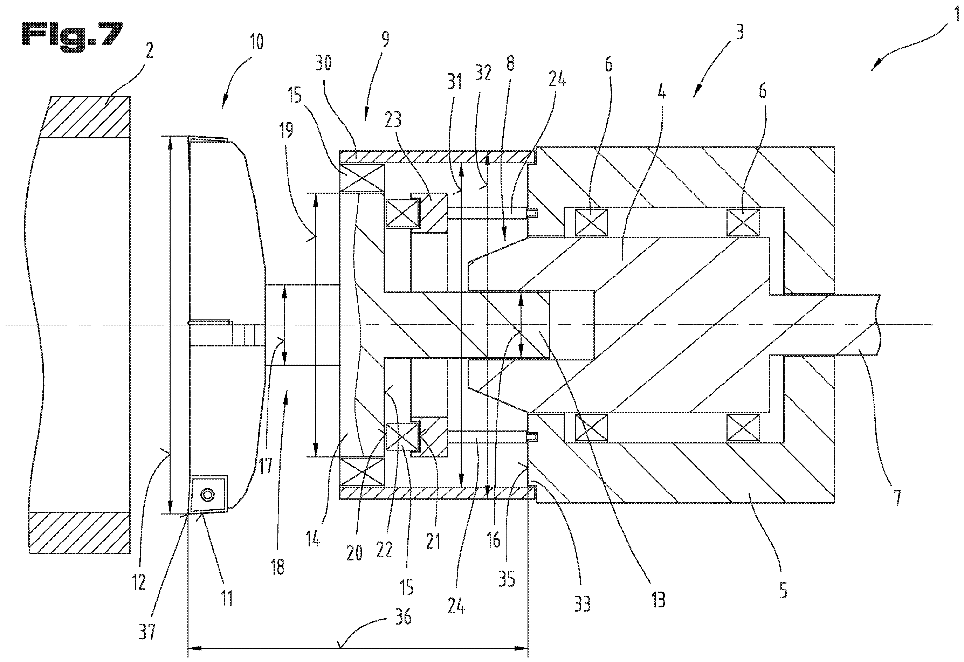

In der Fig. 7 ist eine weitere und gegebenenfalls für sich eigenständige Ausführungsform des Bearbeitungswerkzeuges 9 gezeigt, wobei wiederum für gleiche Teile gleiche Bezugszeichen bzw. Bauteilbezeichnungen wie in den vorangegangenen Figuren 1 bis 6 verwendet werden. Um unnötige Wiederholungen zu vermeiden, wird auf die detaillierte Beschreibung in den vorangegangenen Figuren 1 bis 6 hingewiesen bzw. Bezug genommen.

Wie aus Fig. 7 ersichtlich, kann vorgesehen sein, dass am Abstützring 14 sowohl ein Axiallager, als auch ein Radiallager angeordnet ist. Dies stellt eine Kombination der Ausführungsvariante aus einer der Figuren 1 bis 5 und der Ausführungsvariante aus Fig. 6 dar.

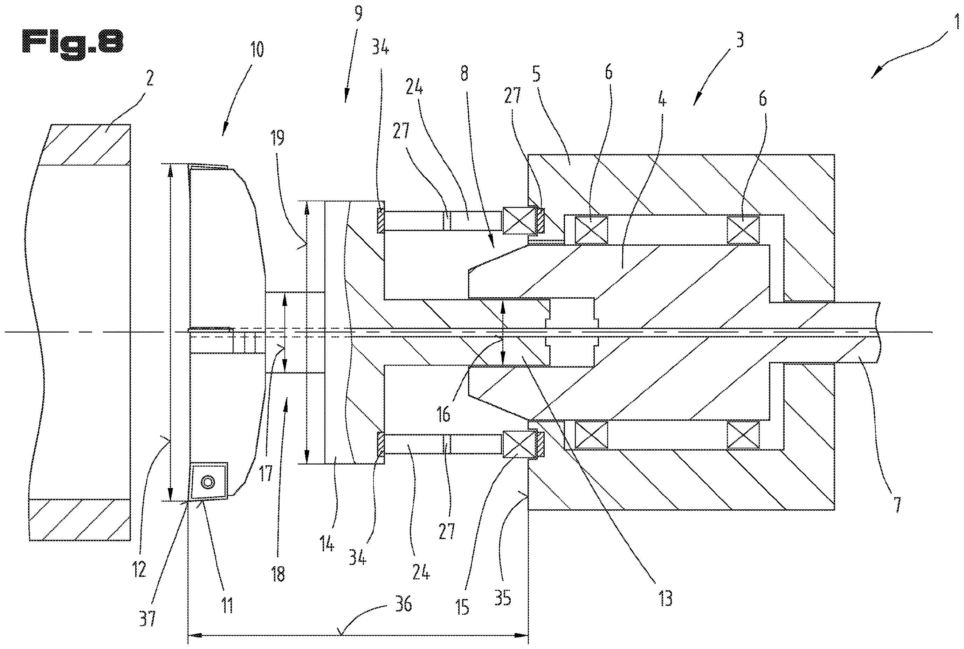

In der Fig. 8 ist eine weitere und gegebenenfalls für sich eigenständige Ausführungsform des Bearbeitungswerkzeuges 9 gezeigt, wobei wiederum für gleiche Teile gleiche Bezugszeichen bzw. Bauteilbezeichnungen wie in den vorangegangenen Figuren 1 bis 7 verwendet werden. Um unnötige Wiederholungen zu vermeiden, wird auf die detaillierte Beschreibung in den vorangegangenen Figuren 1 bis 7 hingewiesen bzw. Bezug genommen.

Wie aus Fig. 8 ersichtlich kann vorgesehen sein, dass das externe Lager 15 im Nahbereich des Gehäuses 5 angeordnet ist, beziehungsweise an einer Stirnseite 35 des Gehäuses 5 aufliegt, oder in dieses integriert ist. Insbesondere kann vorgesehen sein, dass das externe Lager 15 mit dem Gehäuse 5 eine Einheit bildet.

Weiters kann vorgesehen sein, dass ein Sensor 34 ausgebildet ist, welcher die Zustände des Bearbeitungswerkzeuges 9 erfassen kann. Der Sensor 34 kann beispielsweise in den Abstützring 14 integriert sein.

Ein Werkzeugschneidenabstand 36 definiert den Abstand zwischen einer Werkzeugschneide 37 und der Stirnseite 35 des Gehäuses 5.

Wie aus Fig. 8 ersichtlich, kann optional auch vorgesehen sein, dass im Gehäuse 5 ein Aktor 27 in Form eines Piezoelementes integriert ist.

In einer anderen Ausführungsvariante, welche ebenfalls in Fig. 8 dargestellt ist, kann vorgesehen sein, dass der Aktor 27, welcher in Form eines Piezoelementes ausgebildet ist, in den Abstützstift 24 integriert ist.

Aus Fig. 8 ist auch ersichtlich, dass vorgesehen sein kann, dass in die Werkzeugspindel 4 und in das Bearbeitungswerkzeug 9 eine Kühlmittelzufuhr bzw. Schmiermittelzufuhr integriert ist.

Der Schutzbereich ist durch die Ansprüche bestimmt.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Werkzeugmaschine | 31 | Innendurchmesser Abstützrohr |
| 2 | Werkstück | 32 | Außendurchmesser Abstützrohr |
| 3 | Spindelkopf | 33 | Absatz |
| 4 | Werkzeugspindel | 34 | Sensor |
| 5 | Gehäuse | 35 | Stirnseite |
| 6 | Spindellagerung | 36 | Werkzeugschneidenabstand |
| 7 | Antriebszapfen | 37 | Werkzeugschneide |
| 8 | Werkzeugaufnahme | | |
| 9 | Bearbeitungswerkzeug | | |
| 10 | Bearbeitungskopf | | |
| 11 | Schneidkante | | |
| 12 | Durchmesser Bearbeitungskopf | | |
| 13 | Spannbereich | | |
| 14 | Abstützring | | |
| 15 | externes Lager | | |
| 16 | Spanndurchmesser | | |
| 17 | Schaftdurchmesser | | |
| 18 | Hauptschaft | | |
| 19 | Durchmesser Abstützring | | |
| 20 | erste Seite | | |
| 21 | zweite Seite | | |
| 22 | Stirnfläche Abstützring | | |
| 23 | Abstützelement | | |
| 24 | Abstützstift | | |
| 25 | Ausnehmung | | |
| 26 | Federelement | | |
| 27 | Aktor | | |
| 28 | Kolben | | |
| 29 | Hydraulikkammer | | |
| 30 | Abstützrohr | | |

## Patentansprüche

1. Werkzeugmaschine (1) umfassend:
- einen Spindelkopf (3) mit einem Gehäuse (5) und einer Werkzeugspindel (4), welche mittels einer Spindellagerung (6) drehbar im Gehäuse (5) aufgenommen ist, wobei die Werkzeugspindel (4) eine Werkzeugaufnahme (8) aufweist;
- ein Bearbeitungswerkzeug (9) zur spanabhebenden Bearbeitung von Werkstücken (2), wobei das Bearbeitungswerkzeug (9) einen Bearbeitungskopf (10) mit zumindest einer Schneidkante (11) und einen Spannbereich (13) zur Aufnahme in der Werkzeugaufnahme (8) der Werkzeugspindel (4) aufweist,
**dadurch gekennzeichnet, dass** am Bearbeitungswerkzeug (9) ein Abstützring (14) ausgebildet ist und dass zumindest ein Lager (15) vorgesehen ist, welches zwischen dem Abstützring (14) und dem Spindelkopf (3) angeordnet ist, wobei der Abstützring (14) über das Lager (15) am Spindelkopf (3) abgestützt ist, und dass das Lager (15) als Axiallager ausgebildet ist.

2. Werkzeugmaschine nach Anspruch 1, **dadurch gekennzeichnet, dass** der Abstützring (14) am Bearbeitungswerkzeug (9) zwischen dem Bearbeitungskopf (10) und dem Spannbereich (13) ausgebildet ist.

3. Werkzeugmaschine nach einem der vorhergehenden Ansprüche, **dadurch gekennzeichnet, dass** zwischen dem Lager (15) und dem Spindelkopf (3) ein Abstützelement (23) angeordnet ist.

4. Werkzeugmaschine nach Anspruch 3, **dadurch gekennzeichnet, dass** zumindest drei Abstützstifte (24) vorgesehen sind, mittels welchen das Abstützelement (23) am Gehäuse (5) abgestützt ist.

5. Werkzeugmaschine nach Anspruch 4, **dadurch gekennzeichnet, dass** die Abstützstifte (24) längenveränderlich sind.

6. Werkzeugmaschine nach Anspruch 5, **dadurch gekennzeichnet, dass** die Abstützstifte (24) in den Spindelkopf (3) integriert sind und mittels einem Aktor (27), insbesondere einem hydraulisch wirkenden Aktor, längenveränderlich sind.

7. Werkzeugmaschine nach einem der vorhergehenden Ansprüche, **dadurch gekennzeichnet, dass** zwischen dem Abstützring (14) und dem Spindelkopf (3) ein Federelement (26) angeordnet ist.

8. Werkzeugmaschine nach Anspruch 7, **dadurch gekennzeichnet, dass** das Federelement (26) in den Abstützring (14) integriert ist.

9. Werkzeugmaschine nach Anspruch 8, **dadurch gekennzeichnet, dass** das Lager (15) an einer ersten Seite (20) am Federelement (26) anliegt und an einer zweiten Seite (21) am Abstützelement (23) anliegt, wobei das Abstützelement (23) mittels der Abstützstifte (24) am Spindelkopf (3) abgestützt ist.

10. Werkzeugmaschine nach einem der vorhergehenden Ansprüche, **dadurch gekennzeichnet, dass** das Lager (15) als Wälzlager ausgebildet ist.

11. Werkzeugmaschine nach einem der vorhergehenden Ansprüche, **dadurch gekennzeichnet, dass** ein Durchmesser (19) des Abstützringes (14) kleiner ist, als ein Durchmesser (12) des Bearbeitungskopfes (10).

12. Werkzeugmaschine nach einem der vorhergehenden Ansprüche, **dadurch gekennzeichnet, dass** zwei Lager (15) vorgesehen sind, wobei ein Axiallager und ein Radiallager ausgebildet sind.

13. Werkzeugmaschine nach einem der vorhergehenden Ansprüche, **dadurch gekennzeichnet, dass** im Wirkbereich des Lagers (15) ein Sensor (34) angeordnet ist, welcher zur Erfassung von Schwingungen ausgebildet ist.

14. Werkzeugmaschine nach einem der vorhergehenden Ansprüche, **dadurch gekennzeichnet, dass** das Lager (15) an einer Stirnseite (35) des Gehäuses (5) angeordnet ist.

15. Bearbeitungswerkzeug (9) zur spanenden Bearbeitung von Werkstücken (2), insbesondere ein Bearbeitungswerkzeug (9) nach einem der vorhergehenden Ansprüche, wobei das Bearbeitungswerkzeug (9) einen Bearbeitungskopf (10) mit zumindest einer Schneidkante (11) und einen Spannbereich (13) zur Aufnahme in einer Werkzeugaufnahme (8) einer Werkzeugspindel (4) aufweist, **dadurch gekennzeichnet, dass** am Bearbeitungswerkzeug (9) ein Abstützring (14) ausgebildet ist, welcher zur Abstützung an einem als Axiallager ausgebildeten Lager (15) dient.

## Claims

1. A machine tool (1) comprising:
- a spindle head (3) with a housing (5) and a tool spindle (4), which is rotatably received in the housing (5) by means of a spindle bearing (6), wherein the tool spindle (4) has a tool holder (8);
- a processing tool (9) for machining workpieces (2), wherein the processing tool (9) has a processing head (10) with at least one cutting edge (11) and a clamping region (13) for being received in the tool holder (8) of the tool spindle (4),
**characterized in that**
a support ring (14) is formed on the processing tool (9), and that at least one bearing (15) is provided, which is arranged between the support ring (14) and the spindle head (3), wherein the support ring (14) is supported on the spindle head (3) via the bearing (15), and that the bearing (15) is configured as an axial bearing.

2. The machine tool according to claim 1, **characterized in that** the support ring (14) is formed on the processing tool (9) between the processing head (10) and the clamping region (13).

3. The machine tool according to one of the preceding claims, **characterized in that** a support element (23) is arranged between the bearing (15) and the spindle head (3).

4. The machine tool according to claim 3, **characterized in that** at least three support pins (24) are provided, by means of which the support element (23) is supported on the housing (5).

5. The machine tool according to claim 4, **characterized in that** the support pins (24) are variable in length.

6. The machine tool according to claim 5, **characterized in that** the support pins (24) are integrated in the spindle head (3) and are variable in length by means of an actuator (27), in particular a hydraulically acting actuator.

7. The machine tool according to one of the preceding claims, **characterized in that** a spring element (26) is arranged between the support ring (14) and the spindle head (3).

8. The machine tool according to claim 7, **characterized in that** the spring element (26) is integrated in the support ring (14).

9. The machine tool according to claim 8, **characterized in that** the bearing (15) on a first side (20) abuts the spring element (26) and on a second side (21) abuts the support element (23), wherein the support element (23) is supported on the spindle head (3) by means of the support pins (24).

10. The machine tool according to one of the preceding claims, **characterized in that** the bearing (15) is configured as a rolling bearing.

11. The machine tool according to one of the preceding claims, **characterized in that** a diameter (19) of the support ring (14) is smaller than a diameter (12) of the processing head (10).

12. The machine tool according to one of the preceding claims, **characterized in that** two bearings (15) are provided, wherein an axial bearing and a radial bearing are formed.

13. The machine tool according to one of the preceding claims, **characterized in that** a sensor (34), which is configured to detect vibrations, is arranged in the range of the bearing (15).

14. The machine tool according to one of the preceding claims, **characterized in that** the bearing (15) is arranged on an end face (35) of the housing (5).

15. A processing tool (9) for machining workpieces (2), in particular a processing tool (9) according to one of the preceding claims, wherein the processing tool (9) comprises a processing head (10) with at least one cutting edge (11) and a clamping region (13) for being received in a tool holder (8) of a tool spindle (4), **characterized in that** a support ring (14), which serves for support on a bearing (15) configured as an axial bearing, is formed on the processing tool (9).

## Revendications

1. Machine-outil (1) comprenant :
- une tête de broche (3) avec un boîtier (5) et une broche porte-outil (4), qui est logé de manière rotative au moyen d'un palier rotatif (6) dans le boîtier (5), dans lequel la broche porte-outil (4) comprend un porte-outil (8) ;
- un outil d'usinage (9) pour l'usinage par enlèvement de copeaux de pièces (2), dans lequel l'outil d'usinage (9) comprend une tête d'usinage (10) avec au moins une arête de coupe (11) et une partie de serrage (13) pour le logement dans le porte-outil (8) de la broche porte-outil (4),
**caractérisée en ce que**
sur l'outil d'usinage (9), est réalisée une bague d'appui (14) et **en ce qu'**au moins un palier (15) est prévu, qui est disposé entre la bague d'appui (14) et la tête de broche (3), dans lequel la bague d'appui (14) s'appuie par l'intermédiaire du palier (15) contre la tête de broche (3) et **en ce que** le palier (15) est conçu comme un palier axial.

2. Machine-outil selon la revendication 1, **caractérisée en ce que** la bague d'appui (14) sur l'outil d'usinage (9) est réalisée entre la tête d'usinage (10) et la partie de serrage (13).

3. Machine-outil selon l'une des revendications précédentes, **caractérisée en ce que**, entre le palier (15) et la tête de broche (3), est disposé un élément d'appui (23).

4. Machine-outil selon la revendication 3, **caractérisée en ce qu'**au moins trois tiges d'appui (24) sont prévues, au moyen desquelles l'élément d'appui (23) s'appuie contre le boîtier (5).

5. Machine-outil selon la revendication 4, **caractérisée en ce que** les tiges d'appui (24) présentent une longueur variable.

6. Machine-outil selon la revendication 5, **caractérisée en ce que** les tiges d'appui (24) sont intégrées dans la tête de broche (3) et leur longueur peut être modifiée au moyen d'un actionneur (27), plus particulièrement d'un actionneur hydraulique.

7. Machine-outil selon l'une des revendications précédentes, **caractérisée en ce que**, entre la la bague d'appui (14) et la tête de broche (3), est disposé un élément de ressort (26).

8. Machine-outil selon la revendication 7, **caractérisée en ce que** l'élément de ressort (26) est intégré dans la bague d'appui (14).

9. Machine-outil selon la revendication 8, **caractérisée en ce que** le palier (15) s'appuie sur un premier côté (20) contre l'élément de ressort (26) et sur un deuxième côté (21) contre l'élément d'appui (23), dans lequel l'élément d'appui (23) s'appuie au moyen des tiges d'appui (24) contre la tête de broche (3).

10. Machine-outil selon l'une des revendications précédentes, **caractérisée en ce que** le palier (15) est conçu comme un palier à rouleaux.

11. Machine-outil selon l'une des revendications précédentes, **caractérisée en ce qu'**un diamètre (19) de la bague d'appui (14) est inférieur à un diamètre (12) de la tête d'usinage (10).

12. Machine-outil selon l'une des revendications précédentes, **caractérisée en ce que** deux paliers (15) sont prévus, dans lequel un palier axial et un palier radiale sont réalisés.

13. Machine-outil selon l'une des revendications précédentes, **caractérisée en ce que**, dans la zone d'action du palier (15), est disposé un capteur (34) conçu pour la détection de vibrations.

14. Machine-outil selon l'une des revendications précédentes, **caractérisée en ce que** le palier (15) est disposé sur une face frontale (35) du boîtier (5).

15. Outil d'usinage (9) pour l'usinage par enlèvement de copeaux de pièces (2), plus particulièrement un outil d'usinage (9) selon l'une des revendications précédentes, dans lequel l'outil d'usinage (9) comprend une tête d'usinage (10) avec au moins une arête de coupe (11) et une partie de serrage (13) pour le logement dans un porte-outil (8) dans une broche porte-outil (4), **caractérisé en ce que**, sur l'outil d'usinage (9), est réalisé une bague d'appui (14) qui permet l'appui contre un palier (15) conçu comme un palier axial.
